# EUROPÄISCHE PATENTANMELDUNG

(11) **EP 4 819 488 A1**
(43) Veröffentlichungstag der Anmeldung: **07.10.2026**
(21) Anmeldenummer: 26161413.5
(22) Anmeldetag: 27.02.2026
(51) Int. Cl.: H02S 50/00

(54) **SCHNEEBEFREIUNGSSYSTEM FÜR EINE PHOTOVOLTAIKANLAGE**

(30) Priorität: 28.03.2025 CH 314252025
(71) Anmelder: Eneron AG, 3930 Visp (CH)
(72) Erfinder: IMBODEN, Marco, 3924 St. Niklaus (CH)
(74) Vertreter: Keller Schneider Patent- und Markenanwälte AG

(57) **Zusammenfassung**

Die Erfindung betrifft ein Schneebefreiungssystem (100) für eine Photovoltaikanlage (1000) mit einer Steuereinrichtung (110), einem Rückstromeingang (111) zur elektrischen Verbindung mit einem Gleichstromausgang eines PV-Wechselrichters, insbesondere einem Batteriespeicherausgang (201, 202) eines PV-Hybridwechselrichters (200), wenigstens einem Rückstromausgang (112, 122) zur elektrischen Verbindung mit wenigstens einem Photovoltaikmodul (301, 302), und einer mit der Steuereinrichtung (110) signalverbundenen Schneesensoreinrichtung (120) zum Ermitteln einer Schneedicke auf dem wenigstens einen Photovoltaikmodul (301, 302), wobei der Rückstromeingang (111) über eine Schaltvorrichtung (115, 116) mit dem Rückstromausgang (112) elektrisch verbindbar ist, und wobei die Steuereinrichtung (110) angepasst ist, um Signale der Schneesensoreinrichtung (120) zu empfangen und auszuwerten sowie die Schaltvorrichtung (110) in Abhängigkeit der von der Schneesensoreinrichtung (120) empfangenen Signale zu betätigen, insbesondere wobei die Steuereinrichtung (110) mittels der Schaltvorrichtung (115, 116) eine elektrische Verbindung zwischen dem Rückstromeingang (111) und dem Rückstromausgang (112, 122) herzustellen, wenn die Schneedicke einen vorbestimmten Schwellwert überschreitet, und die elektrische Verbindung zwischen dem Rückstromeingang (111) und Rückstromausgang (112, 122) zu unterbrechen, wenn die Schneedicke den vorbestimmten Schwellwert unterschreitet. Ferner betrifft die Erfindung eine Photovoltaikanlage (1000) mit einem solchen Schneebefreiungssystem und ein Betriebsverfahren.

## Beschreibung

Die Erfindung betrifft ein Schneebefreiungssystem für eine Photovoltaikanlage, eine Photovoltaikanlage mit einem solchen Schneebefreiungssystem sowie ein Betriebsverfahren. Ferner befasst sich die Erfindung mit der Verwendung eines Batteriespeicherausgangs eines PV-Wechselrichters zum Beheizen eines Photovoltaikmoduls.

Aus dem Stand der Technik ist bereits bekannt, Photovoltaikmodule von Schnee zu befreien, indem ein elektrischer Rückstrom in ein Photovoltaikmodul geleitet wird, wodurch sich das Photovoltaikmodul aufheizt und unmittelbar auf einer Solareinströmungsebene des Photovoltaikmoduls befindlicher Schnee schmelzen kann. Dadurch bildet sich eine Wasserschicht, über welche der auf dem Photovoltaikmodul abgeleitete Schnee vom Photovoltaikmodul abrutschen kann. So ist eine Schneebefreiung des Photovoltaikmoduls möglich.

Entsprechende Systeme zur Schneebefreiung von Photovoltaikmodulen sind beispielsweise aus CN 116 683 383 A, JP 2016-019451 A, EP 0 940 858 A2 oder US 11,716,052 B2 bekannt. Nachteilig bei den bisher bekannten Lösungen zur Schneebefreiung von Photovoltaikanlagen ist es, dass eine separate Stromquelle erforderlich ist, um den Rückstrom für die Beheizung des Photovoltaikmoduls bereitzustellen. Ein weiterer Nachteil besteht darin, dass bekannte Schneebefreiungssysteme einen Eingriff in bestehende Elemente der Photovoltaikanlage erfordern. Insgesamt sind bisherige Schneebefreiungssysteme aufwändig und insbesondere nur mit hohem technischem und finanziellem Aufwand nachrüstbar.

Aufgabe der Erfindung ist es daher, ein Schneebefreiungssystem für eine Photovoltaikanlage bereitzustellen, das einen geringen Installationsaufwand und eine verbesserte Energieeffizienz aufweist. Ferner ist es Aufgabe der Erfindung, eine Photovoltaikanlage mit einem solchen Schneebefreiungssystem anzugeben. Eine weitere Aufgabe der Erfindung besteht darin, ein Betriebsverfahren für eine solche Photovoltaikanlage und die Verwendung eines Batteriespeicherausgangs eines Wechselrichters in den Fokus zu rücken.

Erfindungsgemäß wird diese Aufgabe im Hinblick auf das Schneebefreiungssystem durch den Gegenstand des Patentanspruchs 1, im Hinblick auf die Photovoltaikanlage durch den Gegenstand des Patentanspruchs 11, hinsichtlich des Betriebsverfahrens durch den Gegenstand des Patentanspruchs 14 und im Hinblick auf die Verwendung eines Batteriespeicherausgangs durch den Gegenstand des Patentanspruchs 15 gelöst.

So beruht die Erfindung konkret auf dem Gedanken, ein Schneebefreiungssystem für eine Photovoltaikanlage mit einer Steuereinrichtung, einem Rückstromeingang zur elektrischen Verbindung mit einem Gleichstromausgang eines PV-Wechselrichters, wenigstens einem Rückstromausgang zur elektrischen Verbindung mit wenigstens einem Photovoltaikmodul und mit einer mit der Steuereinrichtung signalverbundenen Schneesensoreinrichtung zum Ermitteln einer Schneedecke auf dem wenigstens einen Photovoltaikmodul anzugeben. Der Rückstromeingang kann insbesondere mit einem Batteriespeicherausgang eines PV-Hybridwechselrichters verbindbar sein.

Bei der Erfindung ist ergänzend vorgesehen, dass der Rückstromeingang über eine Schaltvorrichtung mit dem Rückstromausgang elektrisch verbindbar ist, wobei die Steuereinrichtung angepasst ist, um Signale der Schneesensoreinrichtung zu empfangen und auszuwerten sowie die Schaltvorrichtung in Abhängigkeit der von der Schneesensoreinrichtung empfangenen Signale zu betätigen. Insbesondere kann die Steuereinrichtung mittels der Schaltvorrichtung eine elektrische Verbindung zwischen dem Rückstromeingang und dem Rückstromausgang herstellen, wenn die Schneedicke einen vorbestimmten Schwellwert überschreitet. Ferner kann die Steuereinrichtung mittels der Schaltvorrichtung die elektrische Verbindung zwischen dem Rückstromeingang und dem Rückstromausgang unterbrechen, wenn die Schneedicke den vorbestimmten Schwellwert unterschreitet.

Generell ermöglicht es das erfindungsgemäße Schneebefreiungssystem, Photovoltaikmodule, insbesondere Solarpaneele, durch Rückstrom beheizen zu lassen, um diese schneefrei zu halten. Dazu misst die Schneesensoreinrichtung die Schneedicke auf dem Photovoltaikmodul. Die gemessenen Daten werden als Signale an die Steuereinrichtung weitergegeben, welche diese Signale auswertet und die Bereitstellung des Rückstroms steuert. Über die Schaltvorrichtung kann die Steuereinheit die Verbindung zwischen dem Gleichstromausgang des PV-Wechselrichters und dem jeweiligen Photovoltaikmodul koppeln oder entkoppeln.

Ein wesentlicher Aspekt der Erfindung besteht darin, dass die für die Beheizung des Photovoltaikmoduls erforderliche Energie aus dem Gleichstromausgang des PV-Wechselrichters bezogen wird. Insbesondere PV-Hybridwechselrichter weisen üblicherweise ein oder mehrere Batteriespeicherausgänge auf, an welche Batteriespeicher angeschlossen werden können. So kann der vom Photovoltaikmodul erzeugte elektrische Strom über den PV-Hybridwechselrichter in den Batteriespeicher geladen werden.

Die Erfindung nutzt nun wenigstens einen der Gleichstromausgänge, insbesondere Batteriespeicherausgänge, des PV-Wechselrichters, um darüber den Rückstrom für die Beheizung des Photovoltaikmoduls zu beziehen. Das hat den Vorteil, dass zusätzliche Netzteile oder weitere Komponenten entbehrlich sind. Das erfindungsgemäße Schneebefreiungssystem kann vielmehr als separates Bauteil bereitgestellt werden, das zwischen dem Gleichstromausgang eines PV-Wechselrichters und ein Photovoltaikmodul geschalten werden kann. Das ist mit wenig Installationsaufwand verbunden und erfordert insbesondere keinen Eingriff in den PV-Wechselrichter. Vielmehr bietet das erfindungsgemäße Schneebefreiungssystem auch eine Nachrüstlösung, die einfach vor Ort installiert werden kann. Insbesondere ist das erfindungsgemäße Schneebefreiungssystem mit unterschiedlichen PV-Wechselrichtern und Photovoltaikmodulen kombinierbar und insoweit universell einsetzbar. Im Ergebnis führt dies zu einer besonders kostengünstigen Nachrüstung.

Viele Photovoltaikanlagen nutzen mehrere Photovoltaikmodule, wobei ein Teil der Photovoltaikmodule über einen ersten Strang in Serie geschaltet sind und ein zweiter teil der Photovoltaikmodule über einen zweiten Strang in Serie geschaltet sind. So sind mehrere Stränge von Photovoltaikmodulen in einer Photovoltaikanlage vorhanden. Diese Stränge werden auch als PV-Strings bezeichnet. Insofern sind bei einer bevorzugten Ausführungsform des erfindungsgemäßen Schneebefreiungssystems wenigstens zwei Rückstromausgänge vorgesehen, die mit voneinander unabhängigen Photovoltaikmodulen, insbesondere PV-Strings, verbindbar sind. Dabei kann jedem Rückstromausgang eine separate Schaltvorrichtung zugeordnet sein. Die Zuordnung separater Schaltvorrichtungen zu den einzelnen Rückstromausgängen hat den Vorteil, dass gezielt unterschiedliche Photovoltaikmodule bzw. PV-Strings mit einem Rückstrom beaufschlagt werden können. So können beispielsweise PV-Module eines ersten Strings, die bereits von Schnee befreit sind, zur Erzeugung von elektrischem Strom genutzt werden, wogegen PV-Module eines zweiten PV-Strings, die noch mit Schnee bedeckt sind, mit einem Rückstrom beaufschlagt werden können, um die PV-Module zu beheizen und den Schnee somit abrutschen zu lassen. Insbesondere ergeben sich durch die separaten Schaltvorrichtungen verbesserte Steuerungsmöglichkeiten für das Schneebefreiungssystem.

Vorzugsweise sind die separaten Schaltvorrichtungen in einer Parallelschaltung mit dem Rückstromeingang verbunden. Das Schneebefreiungssystem weist vorzugsweise lediglich einen einzigen Rückstromeingang auf. So kann also die Energie, die über einen einzigen Gleichstromausgang, insbesondere Batteriespeicherausgang, eines PV-Wechselrichters bereitgestellt wird, zur Versorgung aller Photovoltaikmodule der Photovoltaikanlage mit Rückstrom genutzt werden. Eine aufwändige des Schneebefreiungssystems mit mehreren Gleichstromausgängen des PV-Wechselrichters entfällt damit. Insgesamt wird so die Installation und auch Steuerung des Schneebefreiungssystems vereinfacht.

Die Steuereinrichtung kann mit den, insbesondere allen, separaten Schaltvorrichtungen signalverbunden sein. Die Steuereinrichtung, insbesondere eine Mikrocontrollereinheit, kann auf diese Weise die Energieflüsse zwischen den PV-Wechselrichtern und den Photovoltaikmodulen besonders gut und energieeffizient steuern. So können einzelne PV-Module mit Rückstrom versorgt werden, während andere PV-Module keinen Rückstrom erhalten. Insbesondere kann auf diese Weise auch die Schneedicke auf verschiedenen Photovoltaikmodulen berücksichtigt werden. So kann ein Photovoltaikmodul, das mit einer großen Menge Schnee belegt ist, über einen längeren Zeitraum mit elektrischem Rückstrom versorgt werden, während ein zweites Photovoltaikmodul, das eine relativ geringere Schneedecke trägt, über einen zeitlich kürzeren Zeitraum mit elektrischem Rückstrom versorgt werden. Vorteilhaft ist es in diesem Zusammenhang, wenn jedem Photovoltaikmodul, vorzugsweise zumindest jedem PV-String, eine Schneesensoreinrichtung zugeordnet ist, welche die Schneedicke auf dem jeweiligen Photovoltaikmodul der voneinander unabhängigen PV-Strings ermittelt.

Bei einer vorteilhaften Weiterbildung des erfindungsgemäßen Schneebefreiungssystems weist die Steuereinrichtung wenigstens eine Datenbusschnittstelle zur drahtgebundenen und/oder drahtlosen Datenbusverbindung mit dem PV-Wechselrichter auf. Dabei kann die Steuereinrichtung insbesondere konfiguriert sein, um den PV-Wechselrichter über die Datenbusschnittstelle eine Anforderung zum Bereitstellen von Gleichstrom am Gleichstromausgang, insbesondere zum Laden eines Batteriespeichers für den Batteriespeicherausgang, zu senden.

Insbesondere PV-Hybridwechselrichter haben üblicherweise eine interne Steuereinheit, welche die Verteilung des erzeugten Stroms aus den Photovoltaikmodulen reguliert. So kann der erzeugte Photovoltaikstrom entweder in das Wechselstromnetz eingespeist oder über einen Batteriespeicherausgang in einen Batteriespeicher übertragen werden. Überdies kann die interne Steuereinheit auch bestimmen, dass beispielsweise aus dem externen Wechselstromnetz Strom aufgenommen und als Gleichstrom in den Batteriespeicher geladen wird. Die Steuereinheit im PV-Wechselrichter entscheidet somit selbstständig, aus welcher Stromquelle die angeforderte Energie entnommen wird. Insofern ist es für das Schneebefreiungssystem ausreichend, wenn die Steuereinrichtung über die Datenbusverbindung eine Anforderung an den PV-Wechselrichter sendet, wonach über den Batteriespeicherausgang, an welchem das Schneebefreiungssystem angeschlossen ist, elektrische Energie zur Verfügung gestellt werden soll. Der PV-Wechselrichter, insbesondere ein PV-Hybridwechselrichter entscheidet dann selbstständig, aus welcher Quelle der Rückstrom bezogen wird. Dieser kann entweder aus einem Photovoltaikmodul, das vorzugsweise schneefrei ist, oder aus dem Wechselstromnetz gezogen werden.

Um das Schneebefreiungssystem einfach mit verschiedenen PV-Wechselrichtern koppeln zu können, ist es vorteilhaft, wenn die Datenbusverbindung wenigstens einen CAN-Bus und/oder einen Modbus umfasst. Die vorgenannten Bussysteme sind bei den meisten PV-Wechselrichtern üblich, so dass das Schneebefreiungssystem universell einsetzbar ist.

Die Steuereinrichtung kann außerdem mittels einer Funkverbindung, insbesondere Bluetooth oder WLAN, vorzugsweise Low-Range WiFi (LoRa), mit der Schneesensoreinrichtung verbindbar sein. Eine Funkverbindung erleichtert die Installation des Schneebefreiungssystems. Insbesondere kann die Schneesensoreinrichtung unmittelbar an ein Photovoltaikmodul eingebunden werden, beispielsweise auch über eine Solarstromverbindung, die das Photovoltaikmodul mit dem PV-Wechselrichter verbindet, mit Strom versorgt werden. Alternativ kann die Schneesensoreinrichtung auch batteriebetrieben sein. Indem eine Funkverbindung zur Steuereinrichtung besteht, wird ein aufwändiges Verlegen von Kabeln vermieden. So kann die Schneesensoreinrichtung direkt an einem Photovoltaikmodul auf dem Dach eines Hauses angeordnet sein, wogegen die Steuereinrichtung beispielsweise im Keller des Hauses, insbesondere in der Nähe des PV-Wechselrichters, angeordnet ist.

Das erfindungsgemäße Schneebefreiungssystem ist vorzugsweise äußerst kompakt und einheitlich handhabbar. Dabei ist es besonders vorteilhaft, wenn die Steuereinrichtung, die Schaltvorrichtung, der Rückstromeingang und der Rückstromausgang in einem gemeinsamen Gehäuse angeordnet sind. Insgesamt kann also eine Art Umschaltbox vorgesehen sein, die einheitlich handhabbar ist. Die Umschaltbox kann in der Nähe eines PV-Wechselrichters positioniert und mit einem Gleichstromausgang des PV-Wechselrichters verbunden werden. Der Rückstromausgang des Schneebefreiungssystems, insbesondere der Umschaltbox, kann dann mit einer Solarstromverbindung, insbesondere einem Solarstromkabel, verbunden werden. Eine solche Installation ist äußerst einfach und schnell durchführbar.

Bei einer weiteren bevorzugten Ausführungsform des erfindungsgemäßen Schneebefreiungssystems weist die Schneesensoreinrichtung eine Temperaturmesseinheit und/oder eine Luftfeuchtigkeitsmesseinheit und/oder eine Schneedickenmesseinheit auf. Die Temperaturmesseinheit kann ausgelegt sein, um die Temperatur insbesondere auf einer Solareinstrahlungsebene des Photovoltaikmoduls zu ermitteln. Ebenso kann die Schneesensoreinheit eine Luftfeuchtigkeit im unmittelbaren Umfeld um das Photovoltaikmodul ermitteln. Eine Schneedickenmessung kann erreicht werden, indem die Schneesensoreinheit ein entsprechendes kapazitives Messelement aufweist, dessen Änderungen der elektrischen Kapazität auf die Dicke der Schneedecke auf dem Photovoltaikmodul hinweist.

Vorzugsweise umfasst die Steuereinrichtung weiter eine Datenschnittstelle zum Empfangen von Wetterdaten, insbesondere Wetterprognosedaten, wobei die Steuereinrichtung angepasst ist, um Wetterdaten, insbesondere der Wetterprognosedaten zu empfangen und auszuwerten sowie die Schaltvorrichtung in Abhängigkeit der Wetterdaten, insbesondere der Wetterprognosedaten zu betätigen, insbesondere wobei die Steuereinrichtung mittels der Schaltvorrichtung
- eine elektrische Verbindung zwischen dem Rückstromeingang und dem Rückstromausgang herzustellen, wenn die Schneedicke einen vorbestimmten Schwellwert überschreitet und die Wetterdaten, insbesondere die Wetterprognosedaten für einen Betrieb der Photovoltaikanlage günstig sind, und
- die elektrische Verbindung zwischen dem Rückstromeingang und Rückstromausgang zu unterbrechen, wenn die Schneedicke den vorbestimmten Schwellwert unterschreitet oder wenn die Wetterdaten, insbesondere die Wetterprognosedaten für einen Betrieb der Photovoltaikanlage ungünstig sind.

Mit dem Einbezug der Wetterdaten respektive Wetterprognosedaten wird das System weiter optimiert. Der Schnee wird damit nur dann entfernt, wenn die Wetterlage für die die Stromproduktion durch die Photovoltaikanlage günstig ist. Günstig ist die Wetterlage dann, wenn mit der Photovoltaikanlage mehr Strom produziert werden kann, als für die Entfernung des Schnees aufgewendet wird. In Varianten kann auf eine Berücksichtigung der Wetterdaten auch verzichtet werden.

Vorzugsweise werden dazu Wetterprognosen über einen Zeitraum von 0 bis 3 Tagen, insbesondere von 0 bis 5 Tagen, besonders bevorzugt von 0 bis 10 Tagen berücksichtigt.

In einer weiteren bevorzugten Ausführungsform umfasst die Steuereinrichtung weiter eine Datenschnittstelle zum Empfangen von Daten zum Sonnenaufgang und Sonnenuntergang. Damit kann die Schneeentfernung auch von der Tageszeit abhängig gemacht werden. Zum Beispiel kann sich am Abend, kurz vor Sonnenuntergang unter Umständen eine Schneeentfernung nicht mehr lohnen. Weiter bevorzugt wird ein saisonaler Schattenverlauf berücksichtigt. In Varianten kann auf die Berücksichtigung von Sonnenauf- und -untergangsdaten respektive saisonale Schattenverlaufsdaten auch verzichtet werden.

Eine weitere bevorzugte Ausführungsform der Erfindung sieht eine Schneefangeinrichtung mit einer Befestigungseinheit und einer Fangeinheit vor, die über ein Scharnier gelenkig miteinander verbunden sind. Die Fangeinheit kann mittels eines Antriebs relativ zur Befestigungseinheit von einer Fangeinstellung in eine Freigabestellung verlagerbar sein. Die Steuereinrichtung ist vorzugsweise angepasst, um den Antrieb in Abhängigkeit der von der Schneesensoreinrichtung empfangenen Signale zu betätigen.

In den meisten Regionen, in welchen hoher Schneefall zu erwarten ist, weisen Dächer entsprechende Schneefangeinrichtungen auf, um ein Abrutschen von Schnee vom Hausdach zu vermeiden. Dies soll die Gefahr von Verletzungen für entlang des Hauses laufende Personen reduzieren. Im Zusammenhang mit der Befreiung von Photovoltaikanlagen von Schnee ist eine solche Schneefangeinrichtung jedoch nachteilig. Insofern sieht die Erfindung vor, dass die hier verwendete Schneefangeinrichtung gelenkig über ein Scharnier abklappbar ist. So kann die Schneefangeinrichtung beim Beheizen eines Photovoltaikmoduls abgeklappt werden, so dass der schmelzende Schnee tatsächlich von dem Photovoltaikmodul abrutschen kann. Vorzugsweise ist die Steuereinrichtung so konfiguriert, dass sie den Antrieb der Schneefangeinrichtung betätigt, um die Fangeinheit in eine Freigabestellung zu verlagern, wenn die Schalteinrichtung geschlossen ist, so dass ein Photovoltaikmodul beheizt wird. Dabei ist es möglich, weitere Sensoren in das Schneebefreiungssystem zu integrieren, beispielsweise Bewegungssensoren, die ermitteln, ob unterhalb des Daches, auf welchem die Schneefangeinrichtung montiert ist, Personen zugegen sind. Ein Abklappen der Schneefangeinrichtung sollte lediglich dann erfolgen, wenn dies nicht zu einer Gefährdung von Personen führt. Eine entsprechende Sensorik, beispielsweise anhand von Bewegungssensoren, kann dafür Sorge tragen. Die entsprechende Sensorik ist kann ebenfalls mit der Steuereinrichtung gekoppelt sein, so dass die Steuereinrichtung über alle relevanten Informationen verfügt, um ein sicheres Freigeben der Fangeinheit in die Freigabestellung zu gewährleisten.

Ein nebengeordneter Aspekt der Erfindung betrifft eine Photovoltaikanlage mit einem Photovoltaikmodul, einem PV-Wechselrichter, insbesondere einem PV-Hybridwechselrichter, und einem zuvor beschriebenen Schneebefreiungssystem. Das Photovoltaikmodul ist vorzugsweise über eine Solarstromverbindung mit einem Solarstromeingang des PV-Wechselrichters elektrisch verbunden. Der Rückstromeingang kann mit einem Gleichstromausgang, insbesondere einem Batteriespeicherausgang, des PV-Wechselrichters verbunden sein. Der Rückstromausgang kann mit der Solarstromverbindung elektrisch verbunden sein. Beim Schließen der Schaltvorrichtung wird somit der Gleichstromausgang des PV-Wechselrichters mit der Solarstromverbindung elektrisch verbunden, so dass ein Rückstrom vom Gleichstromausgang des PV-Wechselrichters über die Solarstromverbindung in das Photovoltaikmodul fließen kann. Auf diese Weise wird das Photovoltaikmodul beheizt.

Vorzugsweise ist die Schneesensoreinrichtung des Schneebefreiungssystems an dem Photovoltaikmodul angeordnet. Insbesondere kann die Schneesensoreinrichtung auf einer Rückseite des Photovoltaikmoduls befestigt sein. Andere Positionen der Schneesensoreinrichtung sind ebenfalls möglich. Beispielsweise kann die Schneesensoreinrichtung auch unmittelbar auf einem Dach eines Hauses neben einem Photovoltaikmodul angebracht sein.

Es kann zudem vorgesehen sein, dass das Photovoltaikmodul und die Schneefangeinrichtung auf einer schiefen Ebene, insbesondere einer Dachfläche eines Hauses, montiert sind. Die Schneefangeinrichtung kann unterhalb des Photovoltaikmoduls angeordnet sein. Dabei erstreckt sich die Fangeinheit der Schneefangeinrichtung in der Fangstellung vorzugsweise über eine Solareinstrahlungsebene des Photovoltaikmoduls hinaus. In der Freigabestellung ist die Fangeinheit hingegen unterhalb der Solareinstrahlungsebene angeordnet. Die Solareinstrahlungsebene des Photovoltaikmoduls ist diejenige Oberfläche des Photovoltaikmoduls, die der Sonne weitgehend zugewandt ist. Die Solareinstrahlungsebene ist folglich die Ebene, in welcher die energiegenerierende Oberfläche des Photovoltaikmoduls ausgerichtet ist. Indem sich die Fangeinheit in der Fangstellung über diese Ebene hinauserstreckt, kann auf dem Photovoltaikmodul, insbesondere auf dessen Solareinstrahlungsebene, befindlicher Schnee nicht abrutschen, sondern wird vielmehr von der Fangeinheit der Schneefangeinrichtung zurückgehalten. Dieser Rückhalt entfällt, wenn die Steuereinrichtung dem Antrieb der Schneefangeinheit das Signal zum Abklappen der Fangeinheit gibt. Wenn die Fangeinheit abgeklappt ist, sich also unterhalb der Solareinstrahlungsebene befindet, kann der auf seiner Unterseite angeschmolzene Schnee von dem Photovoltaikmodul abrutschen.

Ein weiterer nebengeordneter Aspekt der Erfindung betrifft ein Verfahren zum Betreiben einer zuvor beschriebenen Photovoltaikanlage, wobei das Verfahren die folgenden Schritte aufweist:
- Ermitteln der Schneedicke und/oder der Temperatur auf dem Photovoltaikmodul mittels der Schneesensoreinrichtung;
- Betätigung der Schaltvorrichtung zur Herstellung der elektrischen Verbindung zwischen Rückstromeingang und dem Rückstromausgang, wenn die Schneedicke einen vorbestimmten Schwellwert überschreitet; und
- Betätigung der Schaltvorrichtung zum Trennen der elektrischen Verbindung zwischen dem Rückstromeingang und dem Rückstromausgang, wenn die Schneedicke den vorbestimmten Schwellwert unterschreitet.

Mit dem erfindungsgemäßen Betriebsverfahren wird eine Möglichkeit bereitgestellt, energieeffizient und einfach ein Photovoltaikmodul von Schnee zu befreien. Dazu wird in der Steuereinrichtung ein Schwellwert festgelegt, der einer bestimmten Schneedicke entspricht. Empfängt die Steuereinrichtung von der Schneesensoreinrichtung ein Signal, dessen Wert oberhalb des Schwellwerts liegt, so wird die Schaltvorrichtung betätigt und ein Rückstrom kann in das PV-Modul fließen, wodurch sich dieses erhitzt und den draufliegenden Schnee anschmilzt. Der Schnee kann anschließend von dem Photovoltaikmodul abrutschen. Die Schneesensoreinrichtung erfasst nunmehr eine geringe Schneedicke oder eine Schneedicke von null, jedenfalls jedoch unterhalb des vorbestimmten Schwellwerts. In diesem Fall betätigt die Steuereinrichtung die Schaltvorrichtung so, dass die elektrische Verbindung zwischen dem Rückstromeingang und dem Rückstromausgang getrennt wird. So wird ein weiteres Beheizen des Photovoltaikmoduls unterbunden. Vielmehr kann das Photovoltaikmodul vollständig zur Energieerzeugung genutzt werden.

Ein weiterer Aspekt der Erfindung betrifft die Verwendung eines Batteriespeicherausgangs eines PV-Wechselrichters, insbesondere eines PV-Hybridwechselrichters, als Stromquelle für eine Beheizung eines Photovoltaikmoduls mittels elektrischem Rückstrom. Die Ausführungen im Zusammenhang mit dem eingangs genannten Schneebefreiungssystem und der zuvor beschriebenen Photovoltaikanlage gelten entsprechend auch für die hier beanspruchte Verwendung des Batteriespeicherausgangs eines PV-Wechselrichters. Durch die Verwendung des Batteriespeicherausgangs sinken der Installationsaufwand und insbesondere auch die Kosten für die Beheizung von Photovoltaikmodulen.

Die Erfindung wird im Folgenden anhand eines Ausführungsbeispiels unter Bezugnahme auf die beigefügten schematischen Zeichnungen näher erläutert. Darin zeigen
- Fig. 1: ein Schaltbild einer Photovoltaikanlage mit einem erfindungsgemäßen Schneebefreiungssystem nach einem bevorzugten Ausführungsbeispiel; und
- Fig. 2: eine schematische, perspektivische Ansicht eines Hauses mit einer Photovoltaikanlage gemäß Fig. 1.

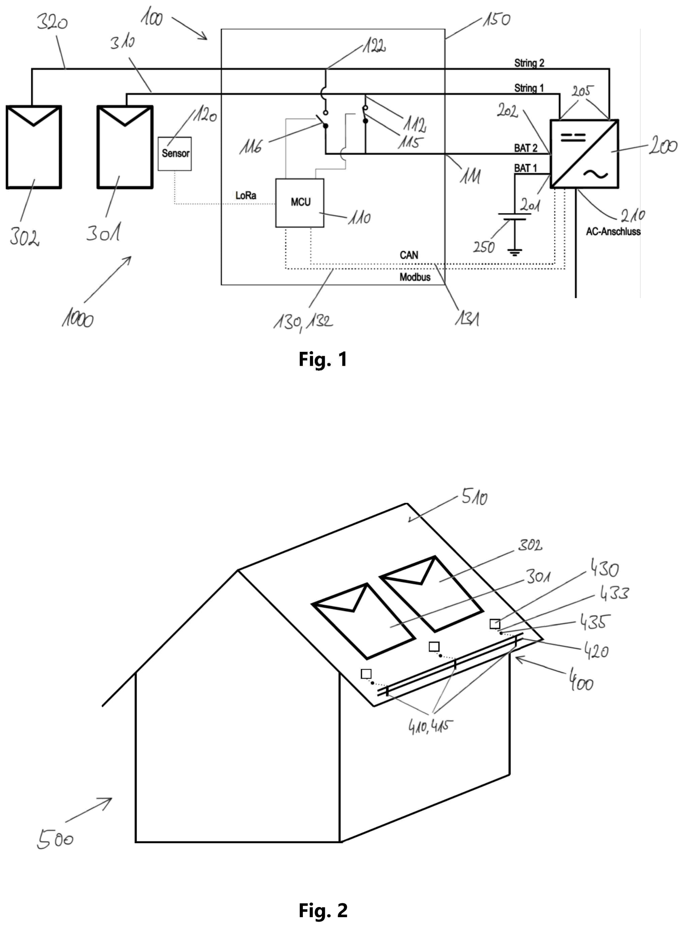

Die in Fig. 1 dargestellte Photovoltaikanlage 1000 umfasst die üblichen Komponenten einer solchen Anlage, insbesondere einen PV-Hybridwechselrichter 200 und Photovoltaikmodule 301, 302. Die Photovoltaikmodule 301, 302 sind jeweils über Solarstromverbindungen 310, 320 mit Solarstromeingängen 205 des PV-Hybridwechselrichters 200 verbunden. Der PV-Hybridwechselrichter 200 umfasst außerdem einen Wechselspannungsanschluss 210, über welchen der PV-Hybridwechselrichter 200 mit einem externen Wechselstromnetz verbindbar ist.

Der PV-Hybridwechselrichter 200 umfasst ferner zwei Batteriespeicherausgänge 201, 202. Dabei ist ein erster Batteriespeicherausgang 201 mit einem Batteriespeicher 250 verbunden. Über den ersten Batteriespeicherausgang 201 wird Gleichstrom bereitgestellt, um den Batteriespeicher 250 zu laden.

In die in typischer Weise ausgebildete Photovoltaikanlage 1000 ist gemäß Fig. 1 ein erfindungsgemäßes Schneebefreiungssystem 100 integriert. Die Integration erfolgt dabei durch einfache Installation einer Umschaltbox, welche die entsprechenden Komponenten zur Schneebefreiung der Photovoltaikmodule 301, 302 aufweist. Ferner gehört zum Schneebefreiungssystem 100 eine Schneesensoreinrichtung 120, die mit wenigstens einem der Photovoltaikmodule 301, 302 verbindbar ist.

Das Schneebefreiungssystem 100 umfasst ein Gehäuse 150, in welchem die elektronischen und elektrischen Bauteile des Schneebefreiungssystems 100 integriert sind. Insbesondere sind in dem Gehäuse 150 eine Steuereinrichtung 110 und mehrere Schaltvorrichtungen 115, 116 angeordnet. Die Schaltvorrichtungen 115, 116 sind einerseits mit einem Rückstromeingang 111 verbunden und verlaufen anschließend in Parallelschaltung zu mehreren Rückstromausgängen 112, 122. Der Rückstromeingang 111 kann mit einem der Batteriespeicherausgänge 201, 202 verbunden werden. Bei dem hier dargestellten Ausführungsbeispiel ist der Rückstromeingang 111 des Schneebefreiungssystems 100 mit dem zweiten Batteriestromausgang 202 des PV-Hybridwechselrichters 200 verbunden. Die bei dem hier dargestellten Schneebefreiungssystem 100 vorgesehenen zwei Schaltvorrichtungen 115, 116 sind jeweils mit ihren zugeordneten Rückstromausgängen 112, 122 mit einem der Solarstromverbindungen 310, 320 verbunden.

Konkret ist eine erste Schaltvorrichtung 115 über einen Rückstromausgang 112 mit der ersten Solarstromverbindung 310 gekoppelt. Eine zweite Schaltvorrichtung 116 ist über den Rückstromausgang 122 mit der zweiten Solarstromverbindung 120 verbunden. Die beiden Schaltvorrichtungen 115, 116 sind jeweils über die Steuereinrichtung 110 steuerbar. Die Steuereinrichtung 110 ist insbesondere konfiguriert, um ein Steuersignal an die Schaltvorrichtungen 115, 116 zu senden, um die Schaltvorrichtungen 115, 116 von einer Offenstellung in eine Schließstellung und umgekehrt zu überführen. In der Schließstellung der Schaltvorrichtung 115, 116 ist ein Stromfluss von erstem Gleichstromanschluss 111 zum jeweils zugeordneten Rückstromausgang 112, 122 möglich. In der Offenstellung ist diese Verbindung getrennt. In der Schließstellung kann also Gleichstrom aus dem Batteriespeicherausgang 201, 202 an wahlweise das erste Photovoltaikmodul 301 und/oder das zweite Photovoltaikmodul 302 fließen. Dieser elektrische Rückstrom bewirkt eine Erwärmung des jeweiligen Photovoltaikmoduls 301, 302, so dass darauf angeordneter Schnee schmilzt und damit von dem Photovoltaikmodul 301, 302 abrutschen kann.

Um zu ermitteln, ob eine Beheizung eines Photovoltaikmoduls 301, 302 erforderlich ist, ist die Schneesensoreinrichtung 120 vorgesehen. Die Schneesensoreinrichtung 120 ist mit wenigstens einem der Photovoltaikmodule 301, 302 verbindbar und ermöglicht die Ermittlung einer Schneedicke auf dem Photovoltaikmodul 301, 302. Die Ermittlung der Schneedicke kann beispielsweise über ein entsprechendes kapazitives Messelement erfolgen. Ferner kann die Schneesensoreinrichtung 120 einen Temperatursensor und/oder einen Feuchtigkeitssensor umfassen. Die Verbindung zwischen der Schneesensoreinrichtung 120 und der Steuereinrichtung 110 erfolgt vorzugsweise über Funk, insbesondere Low-Range-WiFi (LoRa). Die von der Schneesensoreinrichtung 120 erfassten Daten werden als Signale an die Steuereinrichtung 110 übermittelt, wobei die Steuereinrichtung 110 diese Signale auswertet und entsprechende Schaltsignale an die Schaltvorrichtungen 115, 116 überträgt.

Um zu gewährleisten, dass der PV-Hybridwechselrichter 200 am zweiten Batteriespeicherausgang 202 Gleichstrom zur Beheizung der Photovoltaikmodule 301, 302 bereitgestellt, kann die Steuereinrichtung 110 über eine Datenbusverbindung 130 mit dem PV-Hybridwechselrichter 200 verbunden sein. Diese Verbindung kann drahtlos oder drahtgebunden. Vorzugsweise umfasst die Datenbusverbindung eine CAN-Bus-Verbindung 131 und/oder eine Modbus-Verbindung 132. Vorzugsweise stellt das Schneebefreiungssystem 100 beide Bussysteme zur Verfügung, um unterschiedliche PV-Hybridwechselrichter 200 ansteuern zu können. Über die Datenbusverbindung 130 kann die Steuereinrichtung 110 ein Anforderungssignal an den PV-Hybridwechselrichter 200 übermitteln. Das Anforderungssignal enthält vorzugsweise die Anforderung von Ladestrom für einen Batteriespeicher über den zweiten Batteriespeicherausgang 202.

Mit anderen Worten simuliert die Steuereinrichtung 110, dass am zweiten Batteriespeicherausgang 202 eine Batterie angeschlossen ist und diese nunmehr geladen werden soll. So wird erreicht, dass der PV-Hybridwechselrichter 200 Gleichstrom am zweiten Batteriespeicherausgang 202 bereitstellt, der dann zur Beheizung der Photovoltaikmodule 301, 302 genutzt werden kann.

Besonders vorteilhaft ist es, wenn das Schneebefreiungssystem 100 zusätzlich eine Schneefangeinrichtung 400 in die Steuerung der Steuereinrichtung 110 einbindet. Fig. 2 zeigt eine solche Schneefangeinrichtung 400, die über eine Befestigungseinheit 410 mit einer Dachfläche 510 eines Hauses 500 verbunden ist. Die Befestigungseinheit 410 kann beispielsweise eine entsprechende Halteplatte sein, die mit Dachsparren und/oder Dachziegeln verbindbar ist. Ferner umfasst die Schneefangeinrichtung 400 eine Fangeinheit 420, die oft als Gitter oder durch Schneefangrohre gebildet ist. Derartige Schneefangeinrichtungen 400 sind grundsätzlich bekannt. Bei dem hier dargestellten Ausführungsbeispiel befindet sich zwischen der Befestigungseinheit 410 und der Fangeinheit 420 ein Scharnier 415. Das Scharnier 415 kann insbesondere einen Endanschlag aufweisen, so dass eine Bewegung der Fangeinheit 420 gegenüber der Befestigungseinheit 410 begrenzt ist.

Bei der hier gezeigten Schneefangeinrichtung 400 ist vorgesehen, dass an einem oberen Ende der Fangeinheit 420 ein Seil 433 fixiert ist. Insbesondere können über die Länge der Fangeinheit 420 mehrere Seile 433 vorgesehen sein. Die Seile 433 sind vorzugsweise über eine Umlenkrolle 435 und/oder einen Dacheintritt zu einem Motor 430 geführt. Der Motor 430 kann das Seil 433 aufwickeln oder freigeben, so dass die Fangeinheit 420 zur Dachunterkante abgeklappt werden kann. Die Fangeinheit 420 kann so den Weg für auf den Photovoltaikmodulen 301, 302 lagernden Schnee freigeben, so dass dieser abrutschen kann.

Der Motor 430 bildet im Wesentlichen einen Antrieb zur Bewegung der Fangeinheit 420 relativ zur Befestigungseinheit 410. Bei dem hier dargestellten Ausführungsbeispiel erfolgt dies über entsprechende Seile 433. Die Seile 433 sind vorzugsweise als Stahlseile ausgebildet. Alternativ können auch Ketten oder Gurte eingesetzt werden. Andere Verbindungen zwischen der Fangeinheit 420 und dem Motor 430 bzw. Antrieb sind ebenfalls möglich. Beispielsweise kann auch ein Linearantrieb eingesetzt werden, um die Fangeinheit 420 zu bewegen.

In allen Fällen ist vorgesehen, dass der Antrieb mit der Steuereinrichtung 110 in Verbindung steht, insbesondere drahtgebunden oder drahtlos. Die Steuereinrichtung 110 kann beispielsweise nach einem vorbestimmten Zeitraum, nachdem die Beheizung der Photovoltaikmodule 301, 302 durch Schließen einer der Schaltvorrichtungen 115, 116 eingeleitet wurde, einen Steuerbefehl an den Antrieb senden, so dass die Fangeinheit 420 abgeklappt wird. Es ist auch möglich, dass dies zusätzlich oder alternativ anhand von Temperaturdaten, die die Sensoreinrichtung 120 ermittelt, gesteuert wird. Bei einer ermittelten Temperaturdifferenz in einem bestimmten Zeitraum kann beispielsweise durch die Steuereinrichtung 110 das Abklappen der Fangeinheit 420 ausgelöst werden. So kann die Fangeinheit 420 abgeklappt werden, wenn eine hohe Wahrscheinlichkeit besteht, dass der Schnee auf den Photovoltaikmodulen 301, 302 bereits so weit angeschmolzen ist, dass eine hohe Wahrscheinlichkeit des Abrutschens des Schnees besteht.

Es ist überdies möglich, weitere Sensoren vorzusehen, um das Bewegen der Fangeinheit 420 über die Steuereinrichtung **110** zu steuern. Beispielsweise können Bewegungsmelder als Sensoren vorgesehen sein, um zu ermitteln, ob sich im Bereich unterhalb der Schneefangeinrichtung 400 Personen aufhalten. Überdies kann die Steuereinrichtung **110** auch mit Warnsignalen verbunden sein, die beispielsweise optisch oder akustisch warnen, wenn die Fangeinheit 420 in die Freigabestellung überführt wird.

Insgesamt stellt die Erfindung auf diese Weise eine effiziente und kostengünstige Möglichkeit zur Schneebefreiung von Photovoltaikmodulen 301, 302 bereit. Dies wird insbesondere durch die Nutzung des bestehenden Gleichstromausgangs eines PV-Wechselrichters, insbesondere des Batteriespeicherausgangs 201, 202 des PV-Hybridwechselrichters 200 erreicht. Das Schneebefreiungssystem 100 lässt sich so einfach und schnell in bestehende Photovoltaikanlagen 1000 integrieren. Zusätzliche Komponenten, insbesondere Netzteile für die Bereitstellung von Rückstrom zur Erwärmung der Photovoltaikmodule 301, 302 werden so vermieden. Das sorgt für geringe Kosten, wobei durch den Betrieb des Schneebefreiungssystems 100 gleichzeitig der Ertrag der Photovoltaikanlage 1000 gesteigert wird.

### Bezugszeichenliste

- 100: Schneebefreiungssystem
- 110: Steuereinrichtung
- 111: erster Gleichstromanschluss
- 112, 122: zweiter Gleichstromanschluss
- 115, 116: Schaltvorrichtung
- 120: Schneesensoreinrichtung
- 130: Datenbusverbindung
- 131: CAN-Bus
- 132: Modbus
- 150: Gehäuse

- 200: PV-Hybridwechselrichter
- 201, 202: Batteriespeicherausgang
- 205: Solarstromeingang
- 210: Wechselspannungsanschluss
- 250: Batteriespeicher

- 301,302: Photovoltaikmodul
- 310,320: Solarstromverbindung

- 400: Schneefangeinrichtung
- 410: Befestigungseinheit
- 415: Scharnier
- 420: Fangeinheit
- 430: Motor
- 433: Seil
- 435: Umlenkrolle/Dacheintritt

- 500: Haus
- 510: Dachfläche

- 1000: Photovoltaikanlage

## Patentansprüche

1. Schneebefreiungssystem (100) für eine Photovoltaikanlage (1000) mit
- einer Steuereinrichtung (110),
- einem Rückstromeingang (111) zur elektrischen Verbindung mit einem Gleichstromausgang eines PV-Wechselrichters, insbesondere einem Batteriespeicherausgang (201, 202) eines PV-Hybridwechselrichters (200),
- wenigstens einem Rückstromausgang (112, 122) zur elektrischen Verbindung mit wenigstens einem Photovoltaikmodul (301, 302), und
- einer mit der Steuereinrichtung (110) signalverbundenen Schneesensoreinrichtung (120) zum Ermitteln einer Schneedicke auf dem wenigstens einen Photovoltaikmodul (301, 302),
wobei der Rückstromeingang (111) über eine Schaltvorrichtung (115, 116) mit dem Rückstromausgang (112) elektrisch verbindbar ist, und
wobei die Steuereinrichtung (110) angepasst ist, um Signale der Schneesensoreinrichtung (120) zu empfangen und auszuwerten sowie die Schaltvorrichtung (110) in Abhängigkeit der von der Schneesensoreinrichtung (120) empfangenen Signale zu betätigen, insbesondere wobei die Steuereinrichtung (110) mittels der Schaltvorrichtung (115, 116)
- eine elektrische Verbindung zwischen dem Rückstromeingang (111) und dem Rückstromausgang (112, 122) herzustellen, wenn die Schneedicke einen vorbestimmten Schwellwert überschreitet, und
- die elektrische Verbindung zwischen dem Rückstromeingang (111) und Rückstromausgang (112, 122) zu unterbrechen, wenn die Schneedicke den vorbestimmten Schwellwert unterschreitet.

2. Schneebefreiungssystem (100) nach Anspruch 1
**dadurch gekennzeichnet, dass**
wenigstens zwei zweite Gleichstromanschlüsse (112, 122) vorgesehen sind, die mit voneinander unabhängigen Photovoltaikmodulen (301, 302) verbindbar sind, wobei jedem Rückstromausgang (112, 122) eine separate Schaltvorrichtung (115, 116) zugeordnet ist.

3. Schneebefreiungssystem (100) nach Anspruch 2
**dadurch gekennzeichnet, dass**
die separaten Schaltvorrichtungen (115, 116) in einer Parallelschaltung mit dem Rückstromeingang (111) verbunden sind.

4. Schneebefreiungssystem (100) nach Anspruch 2 oder 3
**dadurch gekennzeichnet, dass**
die Steuereinrichtung (110) mit den, insbesondere allen, separaten Schaltvorrichtungen (115, 116) signalverbunden ist.

5. Schneebefreiungssystem (100) nach einem der vorhergehenden Ansprüche
**dadurch gekennzeichnet, dass**
die Steuereinrichtung (110) wenigstens eine Datenbusschnittstelle zur drahtgebundenen und/oder drahtlosen Datenbusverbindung (130) mit dem PV-Wechselrichter aufweist, insbesondere wobei die Steuereinrichtung (110) konfiguriert ist, um dem PV-Wechselrichter über die Datenbusschnittstelle eine Anforderung zum Bereitstellen von Gleichstrom am Gleichstromausgang, insbesondere zum Laden eines Batteriespeichers über den Batteriespeicherausgang (201, 202), zu senden.

6. Schneebefreiungssystem (100) nach Anspruch 5
**dadurch gekennzeichnet, dass**
die Datenbusverbindung (130) wenigstens einen CAN-Bus (131) und/oder einen Modbus (132) umfasst.

7. Schneebefreiungssystem (100) nach einem der vorhergehenden Ansprüche
**dadurch gekennzeichnet, dass**
die Steuereinrichtung (110) mittels einer Funkverbindung, insbesondere Bluetooth oder WLAN, vorzugsweise LoRa, mit der Schneesensoreinrichtung (120) verbindbar ist.

8. Schneebefreiungssystem (100) nach einem der vorhergehenden Ansprüche
**dadurch gekennzeichnet, dass**
die Steuereinrichtung (110), die Schaltvorrichtung (115, 116), der Rückstromeingang (111) und der Rückstromausgang (112, 122) in einem gemeinsamen Gehäuse (150) angeordnet sind.

9. Schneebefreiungssystem (100) nach einem der vorhergehenden Ansprüche
**dadurch gekennzeichnet, dass**
die Schneesensoreinrichtung (120) eine Temperaturmesseinheit und/oder eine Luftfeuchtigkeitsmesseinheit und/oder eine Schneedickenmesseinheit aufweist.

10. Schneebefreiungssystem (100) nach einem der vorhergehenden Ansprüche
**gekennzeichnet durch**
eine Schneefangeinrichtung (400) mit einer Befestigungseinheit (410) und einer Fangeinheit (420), die über ein Scharnier (415) gelenkig miteinander verbunden sind, wobei die Fangeinheit (420) mittels eines Antriebs relativ zur Befestigungseinheit (410) von einer Fangstellung in eine Freigabestellung verlagerbar ist, und wobei die Steuereinrichtung (110) angepasst ist, den Antrieb in Abhängigkeit der von der Schneesensoreinrichtung (120) empfangenen Signale zu betätigen.

11. Schneebefreiungssystem (100) nach einem der vorhergehenden Ansprüche
**dadurch gekennzeichnet, dass**
die Steuereinrichtung (110) weiter eine Datenschnittstelle zum Empfangen von Wetterdaten, insbesondere Wetterprognosedaten umfasst;
wobei die Steuereinrichtung (110) angepasst ist, um Signale der Wetterdaten, insbesondere der Wetterprognosedaten zu empfangen und auszuwerten sowie die Schaltvorrichtung (110) in Abhängigkeit der Wetterdaten, insbesondere der Wetterprognosedaten zu betätigen, insbesondere wobei die Steuereinrichtung (110) mittels der Schaltvorrichtung (115, 116)
- eine elektrische Verbindung zwischen dem Rückstromeingang (111) und dem Rückstromausgang (112, 122) herzustellen, wenn die Schneedicke einen vorbestimmten Schwellwert überschreitet und die Wetterdaten, insbesondere die Wetterprognosedaten für einen Betrieb der Photovoltaikanlage günstig sind, und
- die elektrische Verbindung zwischen dem Rückstromeingang (111) und Rückstromausgang (112, 122) zu unterbrechen, wenn die Schneedicke den vorbestimmten Schwellwert unterschreitet oder wenn die Wetterdaten, insbesondere die Wetterprognosedaten für einen Betrieb der Photovoltaikanlage ungünstig sind.

12. Photovoltaikanlage (1000) mit einem Photovoltaikmodul (301, 302), einem PV-Wechselrichter, insbesondere einem Hybridwechselrichter (200), und einem Schneebefreiungssystem (100) nach einem der vorhergehenden Ansprüche, wobei das Photovoltaikmodul (301, 302) über eine Solarstromverbindung (310, 320) mit einem Solarstromeingang (205) des PV-Wechselrichters elektrisch verbunden ist, und wobei der Rückstromeingang (111) mit einem Gleichstromausgang, insbesondere einem Batteriespeicherausgang (201, 202), des PV-Wechselrichters und der Rückstromausgang (112, 122) mit der Solarstromverbindung (310, 320) elektrisch verbunden sind.

13. Photovoltaikanlage (1000) nach Anspruch 12
**dadurch gekennzeichnet, dass**
die Schneesensoreinrichtung (120) des Schneebefreiungssystems (100) an dem Photovoltaikmodul (301, 302) angeordnet ist.

14. Photovoltaikanlage (1000) nach Anspruch 12 oder 13
**dadurch gekennzeichnet, dass**
das Photovoltaikmodul (301, 302) und die Schneefangeinrichtung (400) auf einer schiefen Ebene, insbesondere einer Dachfläche (510) eines Hauses (500), montiert sind, wobei die Schneefangeinrichtung (400) unterhalb des Photovoltaikmoduls (301, 302) angeordnet ist und sich die Fangeinheit (420) der Schneefangeinrichtung (400) in der Fangstellung über eine Solareinstrahlungsebene des Photovoltaikmoduls (301, 302) hinaus erstreckt und in der Freigabestellung unterhalb der Solareinstrahlungsebene angeordnet ist.

15. Verfahren zum Betreiben einer Photovoltaikanlage (1000) nach einem der Ansprüche 12 bis **14,** wobei das Verfahren die folgenden Schritte aufweist:
- Ermitteln der Schneedicke und/oder der Temperatur auf dem Photovoltaikmodul (301, 302) mittels der Schneesensoreinrichtung (120);
- Betätigung der Schaltvorrichtung (115, 116) zur Herstellung der elektrischen Verbindung zwischen Rückstromeingang (111) und dem Rückstromausgang (112, 122), wenn die Schneedicke einen vorbestimmten Schwellwert überschreitet; und
- Betätigung der Schaltvorrichtung (115, 116) zum Trennen der elektrischen Verbindung zwischen dem Rückstromeingang (111) und dem Rückstromausgang (112, 122), wenn die Schneedicke den vorbestimmten Schwellwert unterschreitet.

16. Verwendung eines Batteriespeicherausgangs (201, 202) eines PV-Wechselrichters, insbesondere eines PV-Hybridwechselrichters (200), als Stromquelle für eine Beheizung eines Photovoltaikmoduls (301, 302) mittels elektrischem Rückstrom.
